# EUROPEAN PATENT APPLICATION

(11) **EP 1 837 061 A2**
(43) Date of publication of application: **26.09.2007**
(21) Application number: 07005843.3
(22) Date of filing: 21.03.2007
(51) Int. Cl.: A63F 13/12

(54) **Game information system and game information device**

(30) Priority: 23.03.2006 JP 2006080548
(71) Applicant: Aruze Corp., Tokyo 135-0063 (JP)
(72) Inventor: Miyake, Genki, Tokyo 135-0063 (JP)
(74) Representative: HOFFMANN EITLE

(57) **Abstract**

The present invention provides a game information device or a system which allows even users having mobile phones of different types from each other to receive a uniform service respectively. A game information device which is configured to include a plurality of communication devices which respectively correspond to various types of mobile communication terminals, a memory which stores information on a game and an information providing modes for respective communication devices, and a controller which executes a control to transmit the same game information to respective mobile communication terminals via the communication devices with an information providing mode corresponding to types of the mobile communication terminals and a game information system which includes the game information device.

## Description

### BACKGROUND OF THE INVENTION

### 1. FIELD OF THE INVENTION

The present invention relates to a game information system and a game information device for providing game information to a player via a mobile communication terminal such as a mobile phone.

### 2. DESCRIPTION OF THE RELATED ART

Conventionally, in a game arcade such as a pachinko parlor or a casino, a plurality of banks each of which arranges a plurality of gaming machines such as pachinko gaming machines, slot machines or pachi-slot machine therein has been disposed. Further, players respectively select and play their favorite gaming machine types in the respective banks.

Further, recently, in addition to the plurality of gaming machines, the number of game arcades each of which arranges a dedicated computer for displaying data on gaming situations controlled by a management server for managing the gaming situations of the respective gaming machines in the inside thereof and displays the gaming situations of the respective gaming machines in response to manipulations of the players is increasing.

Further, as one of various services for the players, an attempt to provide information of the game arcade such as information of an event held in a game arcade to the player has been made.

For example, there has been proposed an information providing mode in which home page information of the game arcade is displayed on the gaming machine or the like to allow the player to get access to a particular server based on the home page information using a mobile phone or the like and to download information such as the explanation of games so that the information is displayed on a display of the mobile phone. Beside such an information providing mode, there has been also known an information providing mode in which a QR code (two-dimensional bar code) is displayed as one of effect images of the gaming machine, and the player can acquire home page information of the game arcade by reading the QR code using a mobile phone (for example, see patent document 1) . Accordingly, the player can enjoy the game while observing the information which the player acquires.
[Patent document 1] Japanese Unexamined Patent Publication No. 2003-103031

### SUMMARY OF THE INVENTION

In a current society where mobile phones are popularly used, the above-mentioned service, that is, an information system which can provide various types of information using the mobile phones which the players carry with them surely satisfies a demand of the players and, at the same time, is welcomed by the players. However, when the information system merely provides home page information, there exists a possibility that the information becomes out-of-date when the updating of information is delayed or an information quantity is small thus leading to the insufficient explanation.

Further, the mobile phones which the players carry differ in various models and, in addition, functions of the mobile phones also differ from each other depending on the models of the mobile phones. Accordingly, there arises a possibility that information qualities and information quantities that the users can acquire differ depending on levels of functions of the respective mobile phones and hence, the respective players cannot receive uniform services.

Accordingly, it is an object of the present invention to provide a game information system and a game information device which can overcome the above-mentioned drawbacks.
(1) According to a first aspect of the present invention, there is provided a game information system which is capable of providing game information on a game to a mobile communication terminal which a player carries from an information device which is installed inside a game arcade, wherein the information device includes a plurality of information transmitting unit which respectively corresponds to various types of mobile communication terminals, an information storage unit which stores information on the game, an information providing mode storage unit which stores information providing modes for every respective information transmitting unit, and a control unit which executes the control to transmit the same game information to the respective mobile communication terminals via the information transmitting unit with the information providing mode corresponding to types of the mobile communication terminals.
(2) Further, according to a second aspect of the present invention, there is provided a game information system, wherein the information device includes a model information inputting unit for inputting the types of the mobile communication terminals and a guide unit for guiding the information providing mode corresponding to the type of the mobile communication terminal which is inputted to the model information inputting unit.
(3) Further, according to a third aspect of the present invention, there is provided a game information system, wherein the information device includes a display unit which functions as the guide unit and is capable of displaying an image, a display control unit which displays a plurality of selection images indicative of the information providing modes corresponding to types of the mobile communication terminals inputted from the model information inputting unit and a determination unit which determines which one is selected out of the plurality of selection images displayed on the display unit.
(4) Further, according to a fourth aspect of the present invention, there is provided a game information system, wherein the plurality of information providing modes includes an information direct providing mode which directly transmits the game information to the mobile communication terminals from the information transmitting unit by a wire or wireless and an information indirect providing mode which indirectly transmits the game information to the mobile communication terminals via a predetermined server, and the display control unit executes a control to display an address or a two-dimensional bar code for accessing to the server to adopt the information indirect providing mode.
(5) Further, according to a fifth aspect of the present invention, there is provided a game information device which is installed inside a game arcade and is capable of transmitting game information on a game to a mobile communication terminal which a player carries, wherein the game information device includes a plurality of information transmitting unit which respectively corresponds to various types of mobile communication terminals, an information storage unit which stores information on the game, an information providing mode storage unit which stores information providing modes for the respective information transmitting unit, and a control unit which executes a control to transmit the same game information to the respective mobile communication terminals via the information transmitting unit with the information providing mode corresponding to types of the mobile communication terminals.

According to the present invention, it is possible to provide uniform game information to all players irrespective of models of the mobile phones which the players carry with them.

Additional objects and advantages of the invention will be set forth in the description which follows, and in part will be obvious from the description, or may be learned by practice of the invention. The objects and advantages of the invention may be realized and obtained by means of the instrumentalities and combinations particularly pointed out hereinafter.

### BRIEF DESCRIPTION OF THE SEVERAL VIEWS OF THE INVENTION OF THE DRAWINGS

The accompanying drawings, which are incorporated in and constitute a part of the specification, illustrate embodiments of the invention, and together with the general description given above and the detailed description of the embodiments given below, serve to explain the principles of the invention.
Fig. 1 is a schematic explanatory view of a game information system according to an embodiment of the present invention;
Fig. 2 is an explanatory view showing whole appearance of a game information device;
Fig. 3 is a block diagram showing an electric constitution of the game information device;
Fig. 4 is an explanatory view showing process when the game information device is actually used;
Fig. 5 is an explanatory view showing process when the game information device is actually used;
Fig. 6 is an explanatory view showing process when the game information device is actually used;
Fig. 7 is an explanatory view of a game information table;
Fig. 8 is a flow chart showing control processing which is executed in the game information system according to the embodiment of the present invention;
Fig. 9 is a flow chart showing control processing which is executed in the game information system according to the embodiment of the present invention;
Fig. 10 is a flow chart showing control processing which is executed in the game information system according to the embodiment of the present invention;
Fig. 11 is a flow chart showing control processing which is executed in the game information system according to the embodiment of the present invention;

### DESCRIPTION OF THE PREFERRED EMBODIMENTS

A game information system according to the present invention can provide game information on a game to a mobile communication terminal which a player carries from an information device which is installed inside a game arcade, wherein the information device includes a plurality of communication devices which respectively correspond to various types of mobile communication terminals, a memory which stores the information on the game and an information providing modes for the respective communication devices, and a controller which transmits the same game information to the respective mobile communication terminals via the communication devices with the information providing modes corresponding to types of the mobile communication terminals.

As the above-mentioned mobile communication terminal, a mobile phone may be used. Further, the controller which is provided to the above-mentioned information device may be a control circuit which mounts an arithmetic operation device such as a CPU and memories such as a ROM and a RAM on a board. Here, the memory can store the information on the game and information providing modes for respective communication devices. Further, the communication device includes a device which suitably functions as a unit which uses a connector corresponding to the model of the mobile phone, a unit which uses an infrared port and a unit which uses the Internet.

Due to such a constitution, all players can receive the same game information using the respective mobile phones irrespective of the types of the mobile phones which the respective players carry via the information device which is installed in the game arcade in which pachinko gaming machines, slot machines and pachi-slot machines are arranged.

Further, the information device may further include a touch panel for inputting the types of the mobile communication terminals and a display for guiding the information providing mode corresponding to the type of the mobile communication terminal which is inputted to the touch panel.

That is, when the player inputs the type of the mobile phone which the player carries as the mobile communication terminal into the touch panel which functions as a model information inputting unit, the touch panel performs a guiding display of the information providing mode corresponding to the model of the player's mobile phone, that is, the information providing mode of the plurality of communication devices. For example, as described later, an information providing mode based on a wired communication which uses the connector, an information providing mode based on a wireless communication which uses an infrared port, an information providing mode which uses a two-dimensional bar code (QR code) for downloading information from a dedicated server via the Internet or the like are informed to the player.

Accordingly, the information device includes the touch panel which functions as the model information inputting unit, the display which also functions as a guiding unit, and the controller which displays a plurality of selection images showing the information providing mode corresponding to the type of the mobile communication terminal (for example, mobile phone) which is inputted from the touch panel on the display and, at the same time, determines which one is selected out of the plurality of selection images displayed on the display.

The touch panel may be provided to a liquid crystal display device which functions as a display, for example.

Accordingly, the display may be also used as a model information inputting unit and hence, the inputting of the model information may be performed by merely selecting the model of the player's mobile phone out of the models displayed on the touch panel whereby the manipulation performance of the player can be enhanced.

That is, when the player who intends to acquire the game information inputs the model of the mobile phone which the player carries using the touch panel of the information device, the liquid crystal display device which constitutes the display functions as the guiding unit and displays the information providing modes corresponding to the model of the player's mobile phone. Further, when the player selects the proper information providing mode out of the displayed information providing modes, commands for acquiring the further information are specifically displayed on a liquid crystal screen. In this manner, the player can install useful game information in the mobile phone by merely following the commands.

As described above, the game information device according to this embodiment includes, as the plurality of the information providing modes, a first information providing mode which transmits the game information to the mobile communication terminals from the communication device via a wireless network, and a second information providing mode which transmits the game information to the mobile communication terminals via a predetermined server. As the transmission device in adopting the second information providing mode, the QR code for getting access to the above-mentioned dedicated server is displayed on the display. Here, an address for getting access to the dedicated server may be displayed directly in a text mode in place of the QR code.

Here, as the game information which the player acquires, for example, event information of the game arcade, new model information or game arcade information are named. However, when predetermined conditions are satisfied, the disparity may be made in information values among the information of the same type. It is needless to say that, for satisfying the predetermined conditions, advantages or disadvantages should not be generated depending on models of the mobile phone.

For example, the game arcade may place a first server on the Internet and information which anybody can acquire by getting access to a predetermined URL is displayed on the first server. Here, as the event, the "date and time" of a "special release event" which increases a pay-out quantity of balls or coins compared to a usual day is displayed as the first information.

When the player attends the game arcade and acquires informationfromtheabove-mentioned gameinformation device, irrespective of the type of mobile phone, in addition to the above-mentioned "date and time", a "model name" of the gamingmachine towhichthe "special release event" is applied is provided to the player as the second information. Even when the "model name" of the gaming machines is merely provided, the user can acquire the useful information. That is, the player can acquire the information on the gaming machine in advance.

Further, the pachinko gaming machine or the slot machine may include a game finish button, for example. When the player pushes the game finish button, a game history and the like are transmitted to a host computer (hereinafter, also referred to as a parlor computer) inside the game arcade together with a machine number of the pachinko gaming machine or the slot machine. Further, when the player can acquire information from the game information device arranged inside the game arcade within a predetermined time (for example, within five minutes) after the player pushes the game finish button, in addition to the first and second information, the player can receive third game information even when the player has any type of the mobile phone. With respect to the third game information, for example, when also the machine number of the machine to which the special release is applied is provided to the player, the probability that the player wins the game on the day of the event can be increased whereby the player can acquire remarkably useful information compared to the first and second information.

Further, the disparity may be made in the value of the third information corresponding to the game history. When it is determined that the player wins prize balls equal to or more than a predetermined number of prize balls based on the game history, the game information device informs the player of only several machine numbers of the gaming machines out of the plurality of gaming machines to which the special release is applied on the day of the event, while when it is determined that the player considerably loses the game based on the game history, the information device informs the player of all machine numbers of the gaming machines to which the special release is applied on the day of the event to the player.

In this manner, according to the embodiment of the present invention, with respect to the mobile phones which respectively have original or independent interfaces depending on makers or models although the players usually carry the mobile phones with them, the player can acquire the same information even when the player carries any type of mobile phone. Accordingly, there is no possibility that quality and quantity of information provided to the players differ from each other depending on the models of mobile phones which the players carry with them and hence, the respective players can receive the uniform service of fixed quality whereby the player's interest in playing the game is enhanced. On the other hand, the game arcade side can improve the quality of the service to the players thus attracting the player to visit the game arcade again thus increasing the number of repeaters.

Here, as the game arcade to which the game information system according to this embodiment of the present invention is introduced, a parlor inwhich the pachinko gaming machines , the pachi-slot machines, the slot machines or the like are installed as the gaming machines is preferable. However, models of the gaming machines and types of the game arcades are not specifically limited.

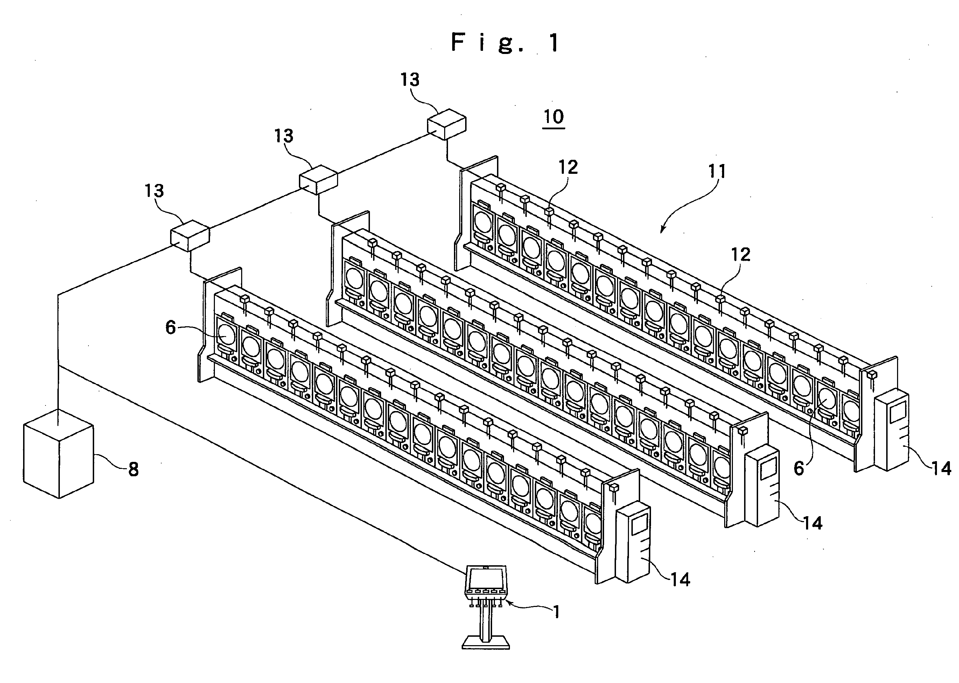

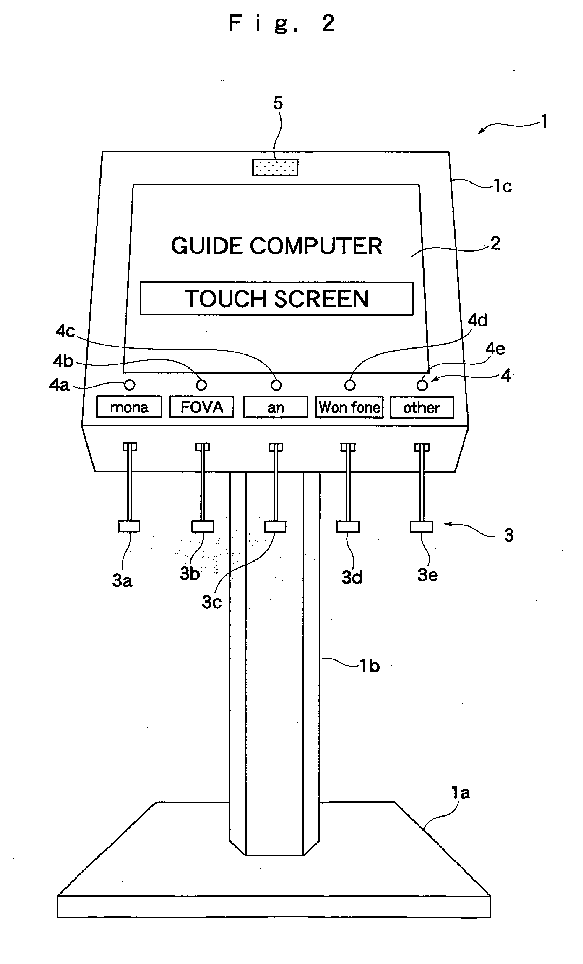

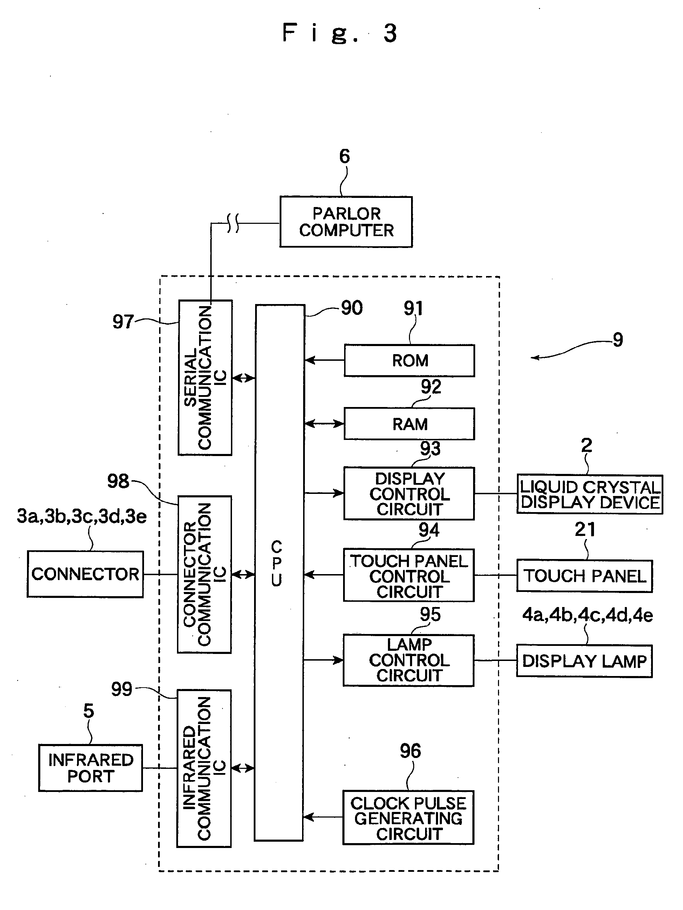

Hereinafter, preferred embodiments of the present invention are specifically explained in conjunction with attached drawings. Fig. 1 is a schematic explanatory view of a game information system according to the embodiment, Fig. 2 is an explanatory view showing the whole appearance of the game information device according to this embodiment, and Fig. 3 is a block diagram showing the electrical constitution of the game information device.

In Fig. 1, numeral 10 indicates a game arcade, wherein the game arcade 10 is a pachinko parlor in which a large number of pachinko gaming machines (hereinafter, also referred to as "sets") 6 are installed. Numeral 11 indicates a gaming facility referred to a so-called "gaming bank", wherein two gaming machine rows each of which is formed by arranging a plurality of pachinko gaming machines 6 in parallel in a state that back sides of the gaming machine rows face each other are installed.

In the drawing, numeral 12 indicates relays which are electrically connected with respective pachinko gaming machines 6, these relays 12 are connected with gaming machine bank controllers 13 which control the respective gaming machine banks 11 which constitute island-like gaming facilities, and the gaming machine bank controllers 13 are connected with a parlor computer 7.

Further, the parlor computer 7 also functions as a dedicated server for operating a site which the pachinko parlor 10 opens through the Internet.

Further, numeral 14 indicates a prepaid card vender, and a player can purchase a card for borrowing gaming balls in playing with the pachinko gaming machine 6.

The pachinko gaming machine 6 is mounted in the gaming bank 11 together with a card unit not shown in the drawing which borrows the gaming balls corresponding to a remaining amount of the card when the card is inserted therein. The pachinko gaming machine 6 includes a gaming table on which various gaming members including gaming nails are provided and a shooting handle for shooting the gaming balls. When the player manipulates the shooting handle, the gaming ball is shot to the gaming table, and when the gaming ball enters a predetermined winning opening, a predetermined number of prize balls are paid out. The player can acquire a premium corresponding to the acquired amount of prize balls and hence, the player continues the pachinko game in an attempt to acquire a larger number of prize balls. Then, when the player can acquire the premium of a value higher than an invested amount, the player wins a game, while when the player acquires the premium of a value lower than the invested amount or the player cannot acquire the premium at all, the player looses the game. In this manner, the player enjoys the game.

Although the basic gaming method of the pachinko gaming machine 6 is unchanged, gaming modes slightly differ from each other depending on various types of pachinko gaming machines and hence, if the player knows the features of the respective pachinko gaming machines 6, the player can advantageously advance the game compared to a player who does not know the features of the respective pachinko gaming machines 6. Further, even among the pachinko gaming machines 6 of the same type, the adjustment conditions of gaming nails formed on the gaming table differ from each other thus making the probabilities that balls enter the winning openings differ from each other.

Accordingly, among the large number of pachinko gaming machines 6 installed in the pachinko parlor 10, various sets ranging from a so-called "extremely advantageous set" which allows the player to acquire a larger number of prize balls to a set which prevents the player from acquiring a large number of prize balls exist in mixture. Further, since all of these sets have completely the same appearance and hence, the players are very sensitive to the information on the extremely advantageous set in many cases.

This embodiment is characterized bya game information system which is introduced into the above-mentioned pachinko parlor 10.

The game information system can, as shown in Fig. 1, provide game information on games from a game information device 1 installed in the inside of the pachinko parlor 10 to a mobile phone 8 which constitutes a mobile communication terminal which the player carries.

As shown in the drawing, the game information device 1 is connected to the parlor computer 7 and can transmit the latest information stored in the parlor computer 7 to the mobile phone 8 which the player carries. As shown in Fig. 2, to explain the appearance of the game information device 1, a stand portion 1b is mounted on a base portion 1a in an erected manner, and a device body 1c which mounts a liquid crystal display device 2 which is a display device constituting a display which also functions as a guide unit described later on a front surface thereof is mounted on an upper portion of the stand portion 1b. Further, the liquid crystal display device 2 includes a touch panel 21 (see Fig. 3) which functions as a machine type information inputting unit. Here, in place of the liquid crystal display device 2 , the game information device 1 may adopt a CRT which includes a touch panel 21 as a display.

Here, the game information device 1 is explained in detail in conjunction with Fig. 2 and Fig. 3.

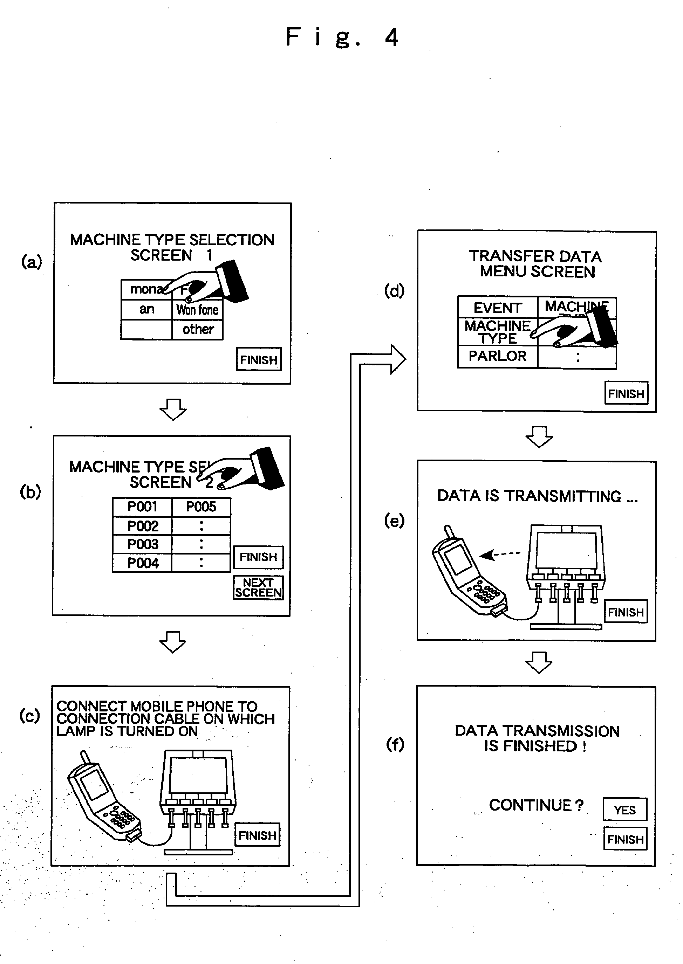

The game information device 1 includes the above-mentioned liquid crystal display device 2 in the device body 1c. The game information device 1 also includes, as a plurality of communication devices corresponding to the respective mobile phones 8 which vary in types and modes (see Fig. 4), wired connection parts 3 which are constituted of connectors 3a to 3e corresponding to respective telephone makers and an infrared port 5 corresponding to the mobile phone 8 capable of performing the communication using infrared rays.

These connection part 3 and infrared port 5 respectively form an information direct providing mode (first information providing mode), wherein the connectors 3a to 3e of the connection part 3 respectively extend downwardly from a lower surface of the device body 1c, and names of mobile phone makers are displayed using labels at positions below the liquid crystal display device 2 for respective connectors 3a to 3e. Further, the infrared port 5 is arranged at a center position of an upper portion of the device body 1c. In the drawing, numeral 4 indicates a connector display part which is provided for each of the above-mentioned connectors 3a to 3e, wherein the connector display parts are constituted of display lamps 4a to 4e which are respectively mounted at positions above the labels of the mobile phone makers.

Further, a control circuit 9 is arranged in the inside of the device body 1c. With the provision of the control circuit 9, the game information device 1 according to the present invention can execute a control to transmit the same game information to the respective mobile phones 8 via the above-mentioned communication devices (connection parts 3, the infrared port 5 and the like) in information providing modes corresponding to types of the mobile phones 8.

The control circuit 9 of the game information device 1 includes, as shown in Fig. 3, a CPU 90, a ROM (Read Only Memory) 91, and a RAM (Random Access Memory) 92. In the above-mentioned ROM 91, various information tables on the game, an information providing program for providing the information corresponding to various types of mobile phones 8, image data displayed on the liquid crystal display device 2 and the like are stored and hence, the ROM 91 functions as an information storage device. Further, the ROM 91 also stores the information providing modes for respective information transmission devices such as the connecting parts 3 and the infrared port 5 as other information and hence, the ROM 91 also functions as an information providing mode storage device. Here, various information tables stored in the inside of the ROM 91 are described later.

On the other hand, the RAM 92 has a function of storing various flags and values of valuables as a temporally storage area of the CPU 90.

Here, in this embodiment, the control circuit 9 is configured to use the ROM 91 as a medium to store programs, tables and the like. However, the control circuit 9 may adopt a storage medium of another mode provided that the storage medium is capable of reading programs, tables and the like using a computer provided with the control device. For example, the programs, tables and the like may be recorded in a storage medium such as a hard disc device, a CD-ROM, a DVD-ROM, a ROM cartridge or the like. Further, these programs are not necessarily preliminarily recorded and may be recorded in the RAM 92 by downloading these programs after supplying electricity to the control device. Still further, respective programs may be recorded in respective storage mediums.

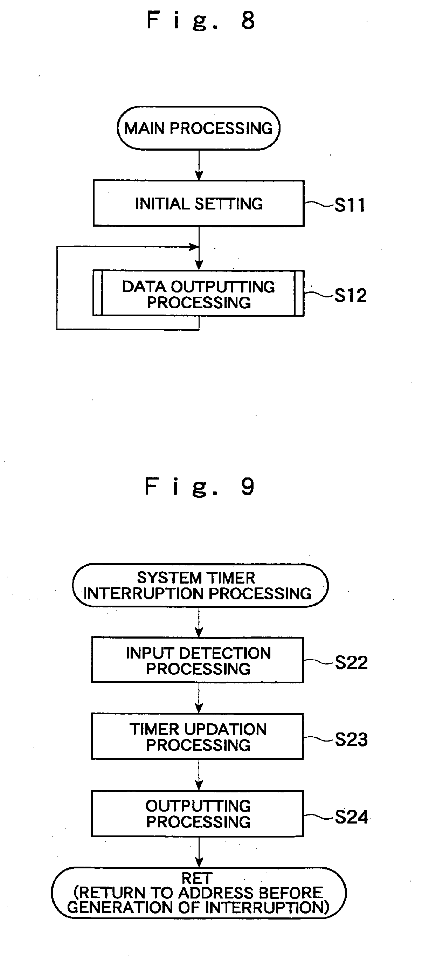

Further, the control circuit 9 includes a display control circuit 93 for performing a control of the liquid crystal display device 2, a touch panel control circuit 94 for controlling the touch panel 21 which functions as a machine type information inputting unit in this embodiment, a lamp control circuit 95 for performing a control of the display lamps 4a to 4e, a reset clock pulse generating circuit 96 for generating clock pulses of predetermined frequencies, a serial communication IC 97 for performing communication with the parlor computer 7, a connector communication IC 98 for transmitting data to the mobile phone 8 via the connectors 3a to 3e, and an infrared communication IC 99 for transmitting data to the mobile phone 8 via the infrared port 5. All of these parts are connected to the CPU 90. Here, the clock pulse generating circuit 96 generates the clock pulse for every predetermined cycle (for example, 2milliseconds) for executing system timer interruption processing described later (Fig. 8).

With the game information system of this embodiment having the above-mentioned constitution, the player can always get access to useful game information using the mobile phone 8 which the player carries and can enjoy the pachinko game more by consulting with the acquired information.

Fig. 4 to Fig. 6 are explanatory views showing steps when the player actually uses the game information device 1. In conjunction with these Fig. 4 to Fig. 6., the manner in which the information is provided based on the information providing mode corresponding to the type of the mobile phone 8 using a guide screen displayed on the liquid crystal display device 2 of the gaming information device 1 which constitutes a guide unit is explained.

As shown in Fig. 4 (a), when a person who uses the game information device 1 (hereinafter referred to as "user") selects a telephone maker of the mobile phone which the user carries using a first machine type selection screen (maker selection screen) displayed on the liquid crystal display device 2 of the game information device 1, the screen is changed to a next second machine type selection screen thus urging the user to select the machine type of the mobile phone 8 (Fig. 4 (b)).

When the control circuit 9 of the game information device 1 determines that the offer of information by the connector connection is appropriate with respect to the selected machine type of the mobile phone 8, the control circuit 9 displays a guide "connect mobile phone to connection cable when lamp is turned on" or the like and, at the same time, an image indicative of the manner of connecting the connection cable to the mobile phone on the liquid crystal display device 2 (Fig. 4(c)).

When the connectors (3a to 3e) of the connection part 3 which is indicated with the lamp are connected to the mobile phone 8, as shown in Fig. 4 (d), the selection screen of the game information which the user wants to acquire is displayed. When the user selects the desired game information, an image indicative of the selected game information is displayed together with a message which guides a state such as "data transmitting" (Fig. 4(e)).

Then, when the transfer of information from the game information device 1 to the mobile phone 8 is finished, as shown in Fig. 4(f), a message "continue game information acquiring operation?" together with a message "data transmission is finished" is displayed on the screen, and the user can perform the further data acquisition when necessary. For example, after acquiring the event information, the user can acquire the next machine type information or the like.

The information transmitted to the mobile phone 8 is stored in a predetermined storage area and the user can confirm the information by displaying the information on the screen of the mobile phone 8 which the user carries at any time when necessary.

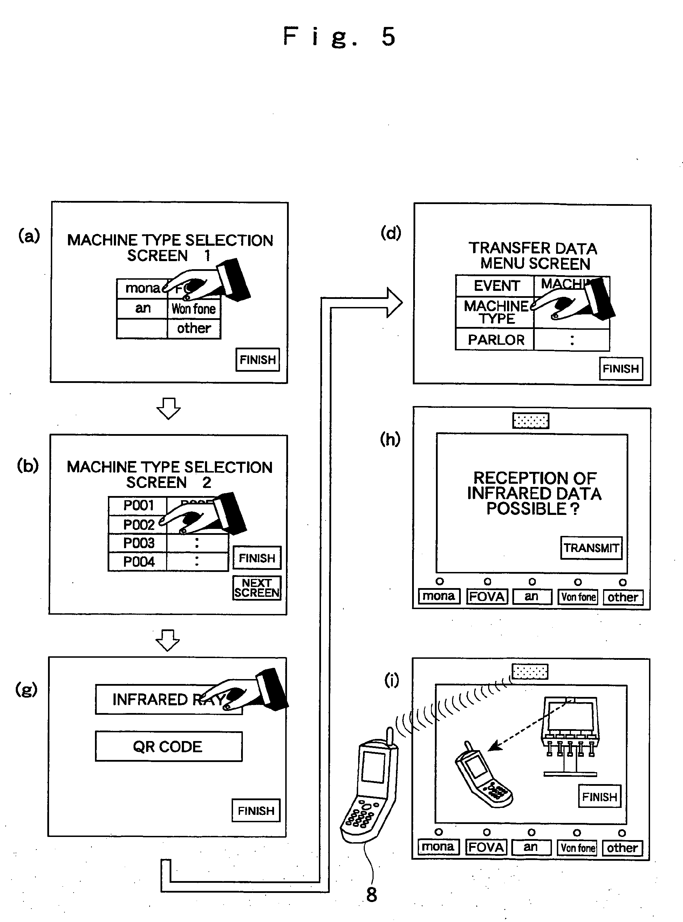

In the above-mentioned embodiment, the explanation is made with respect to the case in which the information providing mode using the wired connection part 3 is selected. As shown in Fig. 5, when the user selects the telephone maker and selects the machine type of the mobile phone 8 (Fig. 5 (a), Fig. 5 (b)), when the machine type of the selected mobile phone 8 is inappropriate for the wired communication using the connector (3a to 3e), or when it is determined that the communication using infrared rays or the acquisition of information using a QR code (two dimensional bar code) is possible, as shown in Fig. 5 (g), a screen display which allows the user to select either one of "infrared rays" and "QR code" is performed. When the user selects "infrared rays", as shown in Fig. 5(d), the selection screen of the game information which the user desires is displayed and the user selects the desired game information.

Then, as shown in Fig. 5 (h), a message such as "the reception of infrared data possible?" is displayed on the screen thus urging the user to be ready for using the infrared port 5. When the user starts the reception of information from the infrared port 5, a screen indicative of the state is displayed on the liquid crystal display device 2 (Fig. 5 (i)) . When the user acquires the game information through such communication, the user finishes the information receiving operation by touching "finish" on the screen.

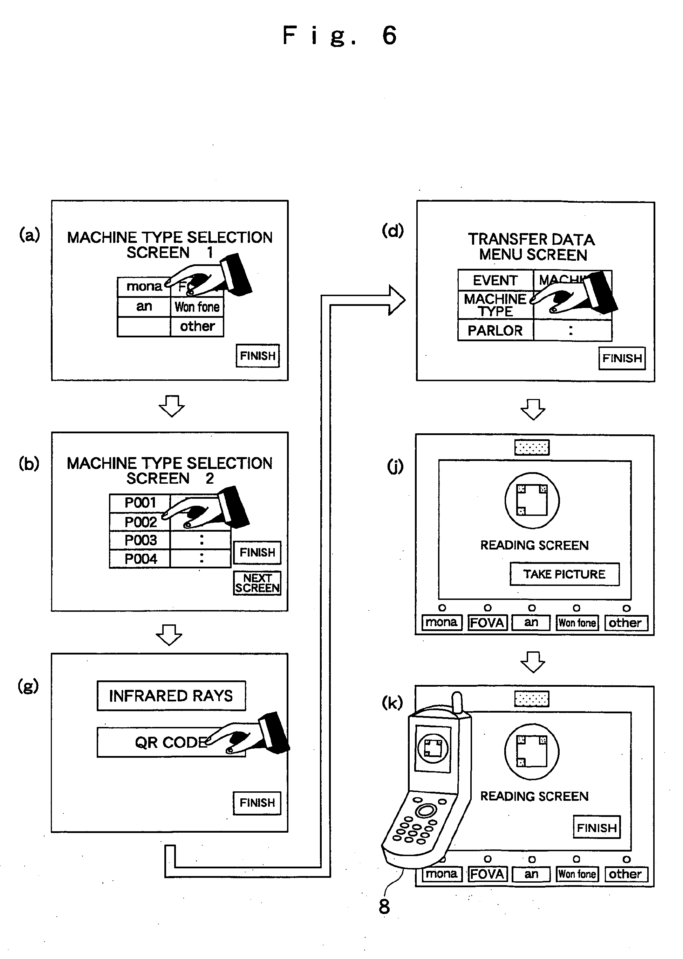

Further, as shown in Fig. 6, when the user selects the telephone maker and selects the machine type of the mobile phone 8 (Fig. 6(a), Fig. 6(b)), when the machine type of the selected mobile phone 8 is inappropriate for the wired communication using the connector (3a to 3e), or when it is determined that the communication using infrared rays or the acquisition of information using a QR code (two dimensional bar code) is possible, as shown in Fig. 6(g), a screen display which allows the user to select either one of "infrared rays" and "QR code" is performed. When the user selects QR code, the selection screen of the game information which the user desires is displayed and the user selects the desired game information. As shown in Fig. 6 (j), the QR code is displayed on the screen and, at the same time, a message "take a picture" is displayed.

Then, the user, as shown in Fig. 6(k), reads the QR code displayed on the liquid crystal display device 2 by taking the picture of the QR code using a camera function of the mobile phone 8 which the user carries. When the photographing is finished, the user finishes the information receiving operation by touching "finish" on the screen.

Here, in reading the QR code, when the information quantity is large, a password and a URL for getting access to the dedicated server the role of which is performed by the parlor computer 7 are displayed on the screen of the mobile phone 8. Here, when the information quantity is small, the information is directly displayed on the screen of the mobile phone 8 in a text form.

In this manner, according to the game information system of the present invention, it is possible to provide the information in the information providing mode which conforms to the mobile phone 8 (here, the first information providing mode which performs the communication via a network attributed to direct wired or wireless communication or the second information providing mode which indirectly acquires the information by getting access to the dedicated server using the QR code). Accordingly, any user can surely acquire the same information irrespective of the machine type of the mobile phone 8 which the user carries.

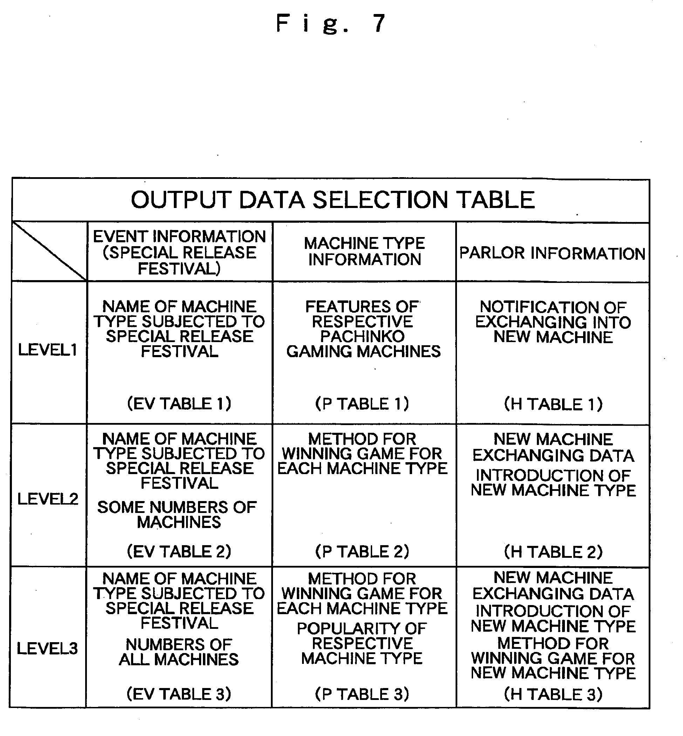

Fig. 7 is an explanatory view of a game information table which is stored in the ROM 91 of the game information device 1 according to this embodiment. The game information which is acquired by the game information system of the present invention is explained in conjunction with Fig. 7.

As the game information of the game information system of this embodiment, event information, machine type information and parlor information are provided. The information which is acquired by making use of this game information system exhibits the density higher than the density of information which is acquired on a site of the Internet which the pachinko parlor 10 (hereinafter referred to as "Internet information") opens. That is, the information which the user acquires by attending to the pachinko parlor 10 and by making use of the game information device 1 mayhave the densityhigher than at least the Internet information which can be acquired by an access from anywhere.

For example, to take the event information as an example, with respect to the Internet information, a notification that "special release festival" is held and the information including only date is provided as the first information. On the other hand, the information which is acquired by making use of the game information device 1 includes at least the name of machine type which is expected to release a large number of prize balls as the second information. Further, when a predetermined condition is satisfied, among the machine types which are expected to release a large number of prize balls, even a machine number of the pachinko gaming machine 6 which is set as a machine which is actually advantageous for the player is provided to the user. Here, "the special release" brings the pachinko gaming machine 6 into a state in which the possibility that the player can acquire a larger number of prize balls compared to a usual state with respect to the pachinko gaming machine 6 which is installed in the pachinko parlor 10 is increased. Usually, such "special release" is not given to all machines but is applied to some machines by loosely adjusting nails so as to bring about a state advantageous for the player. Here, for example, in case of the gaming machine such as a pachi-slot machine, big winning lottery probability can be set and hence, in special release festival, the big winning lottery probability is set with respect to some pachi-slot machines.

Accordingly, the player can know at least the name of machine types subjected to the special release festival which are considered advantageous for the player in the special release festival and hence, the user can get a machine (pachinko gaming machine 6) which is advantageous for the user when the user visits the pachinko parlor 10 during the event (special release festival).

That is, in this embodiment, as shown in Fig. 7, the gaming information which is acquired by making use of the above-mentionedgame information device 1 is also classified into a plurality of stages consisting of level 1 to level 3 and the information which can be acquired differs depending on the condition. Here, with respect to information tables, an EV table 1 to an EV table 3 are prepared as the event information, a P table 1 to a P table 3 are prepared as machine type information and an H table 1 to an H table 3 are prepared as parlor information.

In this embodiment, the density of contents of the information is increased along with the elevation of the level. As illustrated in the drawing, for example, in case of the event (special release festival) information, at the level 1, the information on "schedule" and "name of machine type subjected to special release festival" are provided as described above. At the level 2, in addition to these information, the numbers of some machines are also provided as information. Still further, at the level 3, the numbers of all machines of machine types which are subjected to the special release festival are disclosed.

In the special release festival, provided that the pachinko gaming machines having such machine numbers are ensured, the player can acquire a larger number of prize balls and hence, the information on the machine number is valuable. Since all machine numbers of the machine type which are subjected to the special release festival are acquired at the level 3, it becomes extremely advantageous in finding the machine to be ensured on the very day of the event.

Here, the explanation is briefly made with respect to the information of various levels which are provided under various conditions. In this embodiment, when the player attends the pachinko parlor 10 and makes use of the game information device 1, the level 1 is applied. That is, when the user attends the pachinko parlor 10 and acquires the information from the above-mentioned game information device 1, in any type of mobile telephone 8, in addition to the event open date and time, the name of the machines which are subjected to the special release are provided as the second information.

Further, when the player actually performs the pachinko game (or the pachi-slot game when the pachi-slot machine or the like is installed) and makes use of the game information device 1 after finishing the game, the information at the level 2 or the level 3 is provided to the player corresponding to a result of the game.

In this embodiment, to allow the pachinko parlor 10 side to grasp the game result of the player, a game finish button (not shown in the drawing) is provided to the pachinko gaming machine 6. When the game finish button is pushed, the game history up to now is transmitted to the parlor computer 7 together with the machine number of the pachinko gaming machine 6. Then, when the game finish button is pushed and the player acquires information from the game information device 1 by inputting the machine number of the pachinko gaming machine with which the player plays the game within a predetermined time (for example, within 5 minutes), the player can receive the game information either at the level 2 or at the level 3. Here, when the parlor computer 7 analyzes the game history acquired from the pachinko gaming machine 6 and the paid-number of the prize balls is larger than the number of gaming balls shot by the player, that is, when the player wins the game, the game information at the level 2 is provided to the player. On the other hand, when the paid out number of the prize balls is smaller than the number of gaming balls shot by the player, that is, when the player looses the game, the game information at the level 3 is provided to the player.

Here, the condition which differentiates the level 2 and the level 3 is not limited to the condition described above, and the condition may be suitably set on the pachinko parlor 10 side.

Further, even at the same level 3, the difference may be made. Depending on the degree of loosing of the player, that is, when the difference between the number of acquired prize balls and the number of shot game balls is equal to or more than a predetermined value, in addition to the notification of the numbers of all machines, a service such as the offer of a password which certifies a right to receive a reference number which allows the player to enter the pachinko parlor 10 preferentially when the pachinko parlor 10 is opened may be provided to the player.

In this manner, the pachinko parlor 10 which introduces the game information system of the present invention can enhance the service which has not been offered to the player.

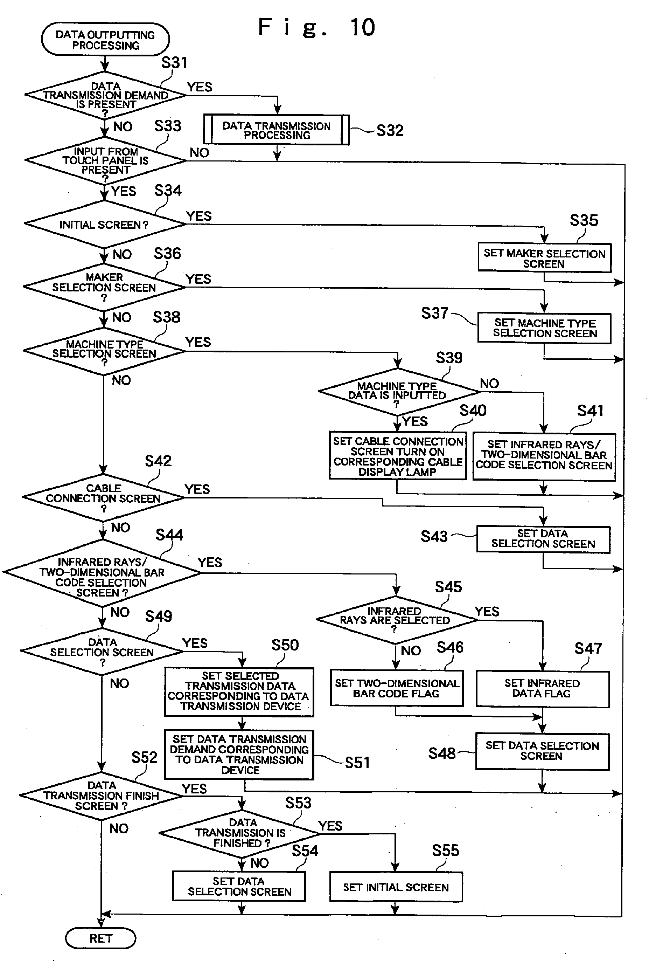

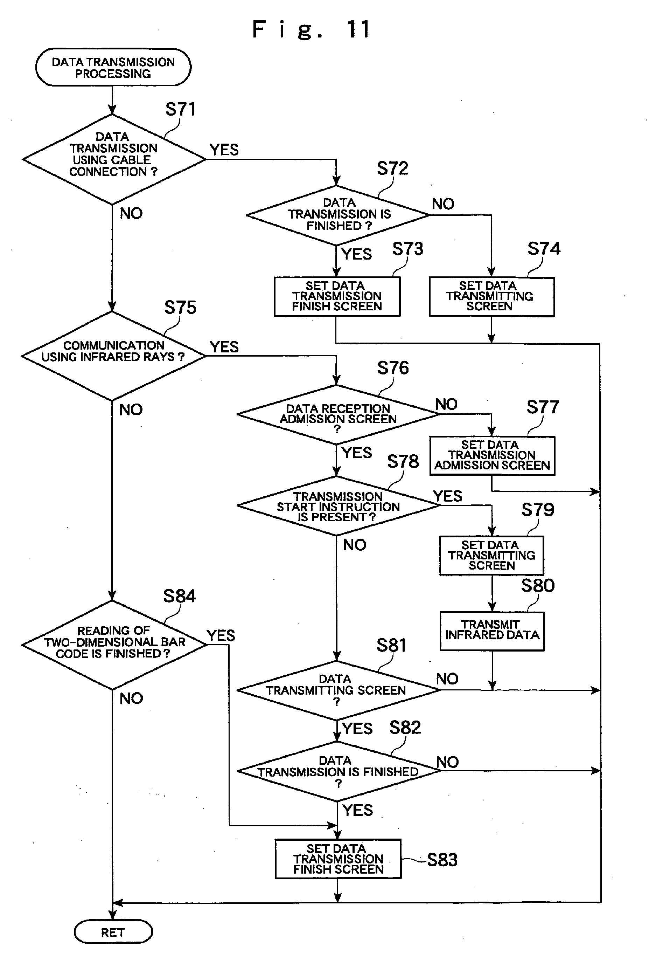

The processing which is executed by the game information system of the present invention is explained hereinafter. Fig. 8 is a flow chart of main processing of the game information system of the present invention, Fig. 9 is a flow chart of system timer interruption processing of the game information system, Fig. 10 is a flow chart of data outputting processing, and Fig. 11 is a flow chart of data transmitting processing.

As shown in Fig. 8, in the main processing, the CPU 90 of the control circuit 9, first of all, executes initial setting processing such as RAM access permission, back up restoring processing, and initialization of an operational region (step S11). Then, the data outputting processing described later is executed (step S12). In this manner, in the main processing, after finishing the initial setting processing in step S11, the processing in step S12 is repeatedly executed.

Further, even in a state that the main processing is executed, there may be a case in which the main CPU 66 interrupts the main processing and executes the system timer interruption processing. In response to a clock pulse which is generated from the clock pulse generating circuit 96 for every predetermined cycle (for example, 2milliseconds), the following system timer interruption processing is executed.

As shown in Fig. 9, in the system timer interruption processing, the main CPU 66 executes input detection processing which detects inputting by the user from the touch panel 21 of the game information device 1 or a signal from the serial communication IC 97, the connector communication IC 98 or the infrared communication IC 99 (step S22). In this processing, the main CPU 66 stores a flag which receives each input signal in a predetermined region of the RAM 92. In step S23, an inner timer stored in a predetermined region of the RAM 92 is updated for every interruption generation time (for example, 2 milliseconds). In this processing, the CPU 90 updates current time data stored in a predetermined region of the RAM 92 for every interruption generation time (for example, 2 milliseconds).

Further, the CPU 90, in step S24, executes processing to output various data to the display control circuit 93, the serial communication IC 97, the connector communication IC 98 and the infrared communication IC 99 in accordance with a demand for outputting various data stored in predetermined regions of the RAM 92. When this processing is finished, this sub routine is finished and the processing is returned to the address before the generation of the interruption and the main processing is executed. Here, dedicated interruption timer processing may be performed with respect to the serial communication IC 97, the connector communication IC 98, the infrared communication IC 99.

The sub routine on data outputting processing which is executed in step S12 of the main processing shown in Fig. 8 is explained in conjunction with Fig. 10.

As shown in Fig. 10, the CPU 90, first of all, determines whether a data transmission demand flag is present in the RAM 92 or not (step S31).

If it is determined that the data transmission demand is present in step S31, the data transmission processing described later in detail is executed (step S32) thus finishing the routine. On the other hand, if it is determined that the data transmission demand is not present in step S31, the processing advances to step S33.

In step S33, the CPU 90 determines whether an input from the touch panel 21 of the game information device 1 is present or not. If it is determined that the input is present, the processing advances to step S34, while if it is determined that the input is not present, the routine is finished.

In step S34, the CPU 90 determines whether the liquid crystal display device 2 of the game information device 1 displays an initial screen or not. If it is determined that the liquid crystal display device 2 displays the initial screen, the CPU 90 sets a maker acquired selection screen as a screen to be displayed on the liquid crystal display device 2 (step S35) and finishes the routine. On the other hand, if the liquid crystal display device 2 does not display the initial screen, the processing advances to step S36.

In step S36, the CPU 90 determines whether the maker selection screen, that is, the first machine type selection screen (see Fig. 4 (a)) is displayed on the liquid crystal display device 2 or not. If it is determined that the maker selection screen is displayed on the liquid crystal display device 2, the second machine type selection screen is set (step S37) thus finishing the routine. On the other hand, if it is determined that the maker selection screen is not displayed on the liquid crystal display device 2, the processing advances to step S38.

In step S38 , the CPU 90 determines whether the second machine type selection screen (see Fig. 4(b)) is displayed on the liquid crystal display device 2 or not. If it is determined that the second machine type selection screen is displayed on the liquid crystal display device 2, the processing advances to step S39, while if it is determined that the secondmachine type selection screen is not displayed on the liquid crystal display device 2, the processing advances to step S42.

In step S39, the CPU 90 determines whether the machine type data is inputted or not (step S39). If the machine type data is inputted, a cable connection screen is set and, at the same time, the display lamp 4 corresponding to the inputted machine type data (see Fig. 2) is turned on thus finishing the routine. On the other hand, if it is determined that the machine type data is not inputted in step S39, the CPU 90 sets an infrared rays/ two-dimensional bar code (QR code) selection screen and finishes the routine.

In step S42, the CPU 90 determines whether the cable connection screen (see Fig. 4 (c)) is displayed on the liquid crystal display device 2 or not. If it is determined that the cable connection screen is displayedonthe liquidcrystal display device 2, the CPU 90 sets the data selection screen (step S43) and finishes the routine. On the other hand, in step S42, if it is determined that the cable connection screen is not displayed on the liquid crystal display device 2, the CPU 90 determines whether the infrared rays/ two-dimensional bar code (QR code) selection screen (see Fig. 5 (g)) is displayed on the liquid crystal display device 2 or not (step S44). If it is determined that the infrared rays/ two-dimensional bar code (QR code) selection screen is displayed on the liquid crystal display device 2, the processing advances to step S45, while if it is determined that the infrared rays/ two-dimensional bar code (QR code) selection screen is not displayed on the liquid crystal display device 2, the processing advances to step S49.

In step S45, the CPU 90 determines whether the communication using infrared rays is selected or not. If it is determined that the communication using the infrared rays is selected, an infrared data flag is set (step S47) and subsequently the data selection screen is set (step S48) thus finishing the routine.

In step S49, the CPU 90 determines whether the data selection screen (see Fig. 4(d), Fig. 5 (d), Fig. 6(d)) is displayed on the liquid crystal display device 2. If it is determined that the data selection screen is displayed on the liquid crystal display device 2, the processing advances to step S50, while if it is determined that the data selection screen is not displayed on the liquid crystal display device 2, the processing advances to step S52.

In step S50, transmission data which is selected by the user via the touch panel 21 is set to a data transmission device and, subsequently, the data transmission demand flag corresponding to the data transmission device is set to the data transmission device (step S51) thus finishing the routine.

In step S52, the CPU 90 determines whether the data transmission finish screen is displayed on the liquid crystal display device 2 or not. If it is determined that the data transmission finish screen is displayed on the liquid crystal display device 2, the processing advances to step S53, while if it is determined that the data transmission finish screen is not displayed on the liquid crystal display device 2, the routine is finished.

In step S53, the CPU 90 determines whether the data transmission is finished or not. That is, the CPU 90 determines whether the user inputs the finish signal via the touch panel 21 or not.

If it is determined that the data transmission is not finished, the data selection screen is set again (step S54), while if it is determined that the data transmission is finished, the initial screen is set (step S55) and the routine is finished.

Then, the data output processing is repeated in the mainprocessing (see Fig. 8) and, in the CPU 90, the processing advances to step S31 and the CPU 90 determines whether a data transmission demand is present or not. If there exists the data transmission demand, the data transmission processing shown in Fig. 11 is executed.

In the sub routine which indicates the data transmission processing shown in Fig. 11, the CPU 90, first of all, determines whether the demand for the data transmission by the cable connection is present or not. If it is determined that the demand for the data transmission by the cable connection is present, the processing advances to step S72. If it is determined that the demand for the data transmission by the cable connection is not present, the processing advances to step S75.

In step S72, the CPU 90 determines whether the data transmission is finished or not. If it is determined that the data transmission is finished, the data transmission finish screen is set (step S73), while if it is determined that the data transmission is not finished, the data transmitting screen is set and the processing returns to step S31 shown in Fig. 10.

In step S75, the CPU 90 determines whether the data transmission demand by the infrared communication is present or not. If it is determined that the data transmission demand by the infrared communication is present, the processing advances to step S76, while if it is determined that the data transmission demand by the infrared communication is not present, the processing advances to step S84.

In step S76, the CPU 90 determines whether the liquid crystal display device 2 of the game information device 1 displays a data reception admission screen (see Fig. 5 (h)) or not. If it is determined that the liquid crystal display device 2 of the game information device 1 displays the data reception admission screen, the processing advances to step S78, while if it is determined that the liquid crystal display device 2 of the game information device 1 does not display the data reception admission screen, the data transmission admission screen is set and the routine is finished. Then, the processing returns to step S31.

On the other hand, if it is determined that the liquid crystal display device 2 of the game information device 1 is the data reception admission screen in step S76, the CPU 90 determines whether a transmission start instruction signal is present or not in step S78. If it is determined that the transmission start instruction signal is present, the data transmitting screen is set (step S79) and, subsequently, the transmission processing of the infrared data is executed (step S80) and the routine is finished and hence, the processing returns to step S31.

On the other hand, if it is determined that the transmission start instruction signal is not present in step S78, the CPU 90, in step S81, determines whether the data transmitting screen is displayed on the liquid crystal display device 2 or not. If it is determined that the data transmitting screen is not displayed on the liquid crystal display device 2, the routine is finished and the processing returns to step S31, while if it is determined that the data transmitting screen is displayed on the liquid crystal display device 2, the CPU 90 determines whether the data transmission is finished or not (step S82). If it is determined that the data transmission is not finished, the routine is not finished and the processing returns to step S31.

Further, if it is determined that the data transmission is finished in step S81, the CPU 90 sets the data transmission finish screen (step S83) and finishes the routine, and the processing returns to step S31.

In step S84 to which the processing advances when it is determined that the data transmission demand by the infrared communication is not present in step S75, the CPU 90 determines whether a signal that the reading of the two-dimensional bar code (QR code) is finished is inputted or not. If it is determined that the reading of the two-dimensional bar code (QR code) is finished, the CPU 90 advances the processing to the above-mentioned step S83 and sets the data transmission screen. Then, the routine is finished and the processing returns to step S31. If it is determined that the reading of the bar code is not finished, the routine is finished as it is and the processing advances to step S31.

Due to the above-mentioned embodiments, it is possible to realize the following game information device and the game information system which includes the game information device.

In the game information system which is capable of providing game information on the game to the mobile communication terminal (for example, the mobile phone 8) which is carried by the player from the game information device 1 which is installed inside the game arcade (for example, pachinko parlor 10), the game information device 1 includes the plurality of communication devices which respectively correspond to various types of mobile communication terminals (for example, the connection part 3, the infrared port 5, two-dimensional bar code and the like), the memory which stores the information on the game and the information providing modes for the respective communication devices (for example, the ROM 91 and the information providing mode storage table which is stored in the ROM 91), and the controller (for example, the CPU 90) which executes the control to transmit the same game information (for example, event information, machine type information, parlor information and the like) to the respective mobile communication terminals via the communication devices with the information providing mode corresponding to types of the mobile communication terminals.

In the game information system, the game information device 1 includes the touch panel 21 which inputs types of the mobile communication terminals (for example, the mobile phone 8) and the display (for example, the liquid crystal display device 2) which guides the information providing modes corresponding to types of the mobile communication terminals inputted from the touch panel 21.

In the respective game information system, the controller of the game information device 1 further displays a plurality of selection images indicative of the information providing modes corresponding to types of the mobile communication terminals inputted from the touch panel 21 on the display and determines which one is selected out of the plurality of selection images displayed on the display.

Further, in the respective game information system, the plurality of information providing modes includes the first information providing mode which transmits the game information (for example, event information, machine type information, parlor information and the like) to the mobile communication terminals (for example, the mobile phone 8) from the communication device (for example, the connection part 3, the infrared port 5 and the like) via the network and the second information providing mode which transmits the game information to the mobile communication terminals via the predetermined server (for example, the parlor computer 7 functioning also as the server), and the controller displays the address or the two-dimensional bar code (for example, the QR code) for accessing to the server on the display (for example, the liquid crystal display device 2) to adopt the second information providing mode.

In the game information system which is capable of providing game information on the game to the mobile communication terminal which is carried by the player from the information device which is installed inside a game arcade, the information device includes a plurality of communication devices which respectively correspond to various types of mobile communication terminals, the memory which stores the information on the game and an information providing modes for the respective communication devices, the touch panel for inputting the types of the mobile communication terminals, the display for guiding the information providing mode corresponding to the type of the mobile communication terminal which is inputted to the touch panel and the controller which respectively transmits the same game information to the respective mobile communication terminals via the communication devices with the information providing mode corresponding to types of the mobile communication terminals.

Further, in the game information device which is installed inside the game arcade and is capable of transmitting the game information on the game to the mobile communication terminal which is carried by the player, the game information device includes a plurality of communication devices which respectively correspond to various types of mobile communication terminals, the memory which stores the information on the game and information providing modes for the respective communication devices and the controller which transmits the same game information to the respective mobile communication terminals via the communication devices with the information providing mode corresponding to types of the mobile communication terminals.

Although the present invention has been explained in conjunction with the embodiments, these embodiments merely illustrate specific examples, and the present invention is not particularly limited by these embodiments. That is, the present invention is mainly characterized in that, in the game information system which is capable of providing game information on the game to the mobile communication terminal which is carried by the player from the game information device which is installed inside the game arcade, the game information device includes the plurality of communication devices which respectively correspond to various types of mobile communication terminals, the memory which stores the information on the game and the information providing modes for the respective communication devices, and the controller which executes the control to transmit the same game information to the respective mobile communication terminals via the communication devices with the information providing mode corresponding to types of the mobile communication terminals. However, the specific constitutions of the respective devices may be suitably designed.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A game information system which is capable of providing game information on a game to a mobile communication terminal which a player carries from an information device which is installed inside a game arcade, wherein
the information device includes a plurality of information transmitting means which respectively corresponds to various types of mobile communication terminals,
an information storage means which stores information on the game,
an information providing mode storage means which stores information providing modes for every respective information transmitting means, and
a control means which executes the control to transmit the same game information to the respective mobile communication terminals via the information transmitting means with the information providing modes corresponding to types of the mobile communication terminals.

2. A game information system according to claim 1, wherein the information device includes a model information inputting means for inputting the types of the mobile communication terminals and a guide means for guiding the information providing mode corresponding to the type of the mobile communication terminal which is inputted to the model information inputting means.

3. A game information system according to claim 2, wherein the information device includes
a display means capable of displaying an image which functions as the guide means,
a display control means which displays a plurality of selection images indicative of the information providing modes corresponding to types of the mobile communication terminals inputted from the model information inputting means and
a determination means which determines which one is selected out of the plurality of selection images displayed on the display means.

4. A game information system according to claim 3, wherein the plurality of information providing modes includes an information direct providing mode which directly transmits the game information to the mobile communication terminals from the information transmitting means by a wire or wireless and an information indirect providing mode which indirectly transmits the game information to the mobile communication terminals via a predetermined server, and
the display control means executes a control to display an address or a two-dimensional bar code for accessing to the server to adopt the information indirect providing mode.

5. A game information device which is installed inside a game arcade and is capable of transmitting game information on a game to a mobile communication terminal which a player carries, wherein
the game information device includes a plurality of information transmitting means which respectively corresponds to various types of mobile communication terminals,
an information storage means which stores information on the game,
an information providing mode storage means which stores information providing modes for the respective information transmitting means, and
a control means which executes a control to transmit the same game information to the respective mobile communication terminals via the information transmitting means with the information providing mode corresponding to types of the mobile communication terminals.
